**Europäisches Patentamt**

**European Patent Office**

**Office européen des brevets**

(19)

(11) Veröffentlichungsnummer: **0 062 754**
**A2**

(12) # EUROPÄISCHE PATENTANMELDUNG

(21) Anmeldenummer: **82101635.9**

(22) Anmeldetag: **03.03.82**

(51) Int. Cl.³: **G 01 D 15/10**

(30) Priorität: **03.04.81 DE 8110103 U**

(43) Veröffentlichungstag der Anmeldung:
**20.10.82 Patentblatt 82/42**

(84) Benannte Vertragsstaaten:
**AT BE CH DE FR GB IT LI LU NL SE**

(71) Anmelder: **Schwarzhaupt Medizintechnik GmbH.**
**Overbeckstrasse 2-4**
**D-5000 Köln 30(DE)**

(72) Erfinder: **Courage, Wilfried, Dipl.-Ing.**
**Hirzstrasse 8**
**D-5000 Köln 41(DE)**

(72) Erfinder: **Schneider, Robert**
**Bitterstrasse 82**
**D-5000 Köln 71(DE)**

(74) Vertreter: **Selting, Günther, Dipl.-Ing. et al,**
**Deichmannhaus am Hauptbahnhof**
**D-5000 Köln 1(DE)**

(54) **Druckvorrichtung zur Aufzeichnung von Test- und Messergebnissen.**

(57) Zur Aufzeichnung von Test- oder Meßergebnissen dienen matrixförmig an einer Platte (8) befestigte Heizelemente
(21), die an Zeilenleitungen und Spaltenleitungen angeschlossen sind. In Abhängigkeit von Meß- oder Steuersignalen wird jeweils eine Zeilenleitung und eine Spaltenleitung
aktiviert, wodurch das betreffende Heizelement (21) aufgeheizt wird und auf einem Datenträger (15) einen optisch
sichtbaren Punkt erzeugt. Bei einem Hörtestgerät wird der
Aufzeichnungspunkt durch die Frequenz und die Lautstärke
eines erzeugten Tones festgelegt. Das betreffende Heizelement (21) wird dann aufgeheizt, wenn der Proband den
betreffenden Ton gehört und daraufhin eine Taste gedrückt
hat. Die Druckvorrichtung arbeitet bewegungslos und ist
generell zur Aufzeichnung von Funktionen mit zwei oder drei
Variablen geeignet.

FIG.1

Sg-Fe

## Druckvorrichtung zur Aufzeichnung von Test- und Meßergebnissen

Die Erfindung betrifft eine Druckvorrichtung zur Aufzeichnung von Test-oder Meßergebnissen auf einen wärmeempfindlichen Datenträger, mit einer Halterung zur Aufnahme des Datenträgers und einer Heizvorrichtung zur selektiven Aufheizung von durch elektrische Signale angegebenen Stellen des Datenträgers.

Bekannt ist ein Hörtestgerät zur Überprüfung des menschlichen Hörvermögens und zur Aufzeichnung von Punkten einer Frequenzkurve, die die Empfindlichkeit der Hörorgane für unterschiedliche Frequenzen angibt. Bei diesem Hörtestgerät werden Töne mit einer bestimmten Lautstärke und unterschiedlichen Frequenzen erzeugt. Jedesmal wenn die Testperson einen Ton gehört hat, betätigt sie einen Schalter um zu bestätigen, daß der Ton gehört worden ist. Auf einem Aufzeichnungsträger werden von einer Druckvorrichtung diejenigen

- 2 -

Punkte markiert, die den wahrgenommenen Tönen entsprechen. Die Aufzeichnung erfolgt mit einem ·Schreibstift, der entlang der Frequenzkurve des Aufzeichnungsträgers von einer Antriebseinrichtung bewegt wird. Derartige Druckvorrichtungen sind wegen der für die Bewegung des Schreibstiftes erforderlichen Mechanik aufwendig und störanfällig. Insbesondere wenn das Meßgerät für Reihenuntersuchungen benutzt wird, wird die Druckvorrichtung stark beansprucht. Andererseits hat ein Ausfall der Druckvorrichtung zur Folge, daß das gesamte Meßgerät bis zur Reparatur unbrauchbar wird.

Der Erfindung liegt die Aufgabe zugrunde, eine Druckvorrichtung der eingangs genannten Art zu schaffen, die ohne eine bewegbare Schreibspitze auskommt und deren Störanfälligkeit gegenüber den bekannten Druckvorrichtungen erheblich vermindert ist.

Zur Lösung dieser Aufgabe ist erfindungsgemäß vorgesehen, daß die Heizvorrichtung eine Platte mit zahlreichen in einer Ebene angeordneten Heizelementen aufweist, die gemeinsam an dem Datenträger anliegen.

Bei der erfindungsgemäßen Druckvorrichtung stehen sämtliche Heizelemente gleichermaßen mit dem in die Halterung eingeschobenen Datenträger in Berührungskontakt. Die Heizelemente werden selektiv aktiviert, d.h. von den zahlreichen Heizelementen wird jeweils

- 3 -

ein ganz bestimmtes Heizelement aufgeheizt, so daß nur dieses Heizelement auf dem Datenträger eine optisch erkennbare Markierung hinterläßt. Auf dem Datenträger werden somit einzelne Stellen oder Punkte markiert. Damit kann zwar keine kontinuierliche Kurve geschrieben werden, jedoch reicht die Punktmarkierung z.B. bei Hörtests oder auch bei Blutdruckmessungen vollständig aus.

In vorteilhafter Weiterbildung der Erfindung sind die Heizelemente an der Platte matrixförmig in Zeilen und Spalten angeordnet und die Enden der Heizelemente einer jeden Zeile sind mit einer auf der Platte angeordneten Leiterbahn verbunden. Die Platte dient somit nicht nur als mechanische Halterung zur Anbringung der Heizelemente, sondern gleichzeitig als Verbindungsvorrichtung, indem sie zeilenweise durchgehende Leiterbahnen aufweist, die jeweils mit den einen Enden der Heizelemente dieser Zeile verbunden sind. Die anderen Enden der Heizelemente können an Leiterabschnitte angelötet sein, welche zu Bohrungen der Platte führen, wobei in die Bohrungen die einen Enden von Dioden eingelötet sind. Auf diese Weise sind die Heizelemente einerseits an die Zeilenleitungen und andererseits an die Dioden der Matrix angeschlossen, wobei die zur Entkopplung dienenden Dioden jeweils zu einem der Heizelemente führen.

Die erfindungsgemäße Druckvorrichtung eignet sich nicht nur in Verbindung mit einem Testgerät zur Messung des individuellen Hörvermögens einer Person in Abhängigkeit von der Lautstärke und Frequenz der Töne, sondern generell zur Aufzeichnung von Meßergebnissen, z.B. zur Aufzeichnung von Meßkurven. Die Meßkurven werden hierbei ohne einen bewegbaren Schreibstift in Form von Punkten auf dem Datenträger erzeugt. Hierzu sind die Zeilen der Matrix von einem "1 aus n"-Kodierer angesteuert, der in Abhängigkeit von einem Meßwert oder einem Steuersignal einen der Zeilenleitungen aktiviert und die Spalten der Matrix sind von einem "1 aus m"-Kodierer angesteuert, der in Abhängigkeit von einem Meßwert oder einem Steuersignal eine der Spalten-Leitungen aktiviert, wobei n und m jeweils beliebige ganze Zahlen sind. Wichtig ist, daß zu einem Zeitpunkt jeweils maximal nur ein einziger Kreuzungspunkt der Matrix aktiviert bzw. ein einziges Heizelement im Heizzustand ist. Dies wird dadurch sichergestellt, daß jeder Meßpunkt bzw. jedes Steuersignal in einem "1 aus n"- Kode oder in einem "1 aus m"-Kode ausgedrückt wird. Ein zusammengehörendes x,y-Wertepaar wird also durch die Kombination eines Impulses an einer einzigen Spaltenleitung mit einem Impuls an einer einzigen Zeilenleitung der Matrix ausgedrückt. Auf diese Weise kann eine Kurve der Formel y = f (x) aufgezeichnet werden.

Die erfindungsgemäße Druckvorrichtung erlaubt noch eine weitere Art der Aufzeichnung nach der allgemeineren Formel y = f (x,z). Hierzu sind sämtliche Zeilenleitungen bzw. sämtliche Spaltenleitungen von einem Steuerschalter synchron von dem zugehörigen Kodierer abschaltbar. Der Steuerschalter schaltet entsprechend der Variablen z, bei der es sich beispielsweise um eine Zeitfunktion handeln kann.

Gemäß einer vorteilhaften Ausgestaltung der Erfindung sind die Dioden senkrecht zu der Platte angeordnet und mit ihren anderen Enden an einer zur ersten Platte parallelen zweiten Platte befestigt. Da eine der Anzahl der Heizelemente entsprechende Anzahl von Dioden benötigt wird, die parallel zueinander und senkrecht zu der ersten Platte angeordnet werden, kann die mechanische Aufhängung der ersten Platte an der als Leiterplatine ausgebildeten zweiten Platte über die Dioden erfolgen. Die zahlreichen parallelen Dioden bilden somit nicht nur eine Entkopplungseinrichtung, sondern gleichzeitig auch die mechanische Halterung um die erste Platte der Druckvorrichtung an der als Träger dienenden zweiten Platte zu befestigen.

Die zweite Platte kann spaltenweise durchgehende Leiterbahnen aufweisen, die rechtwinklig zu den Leiterbahnen der ersten Platte verlaufen. Diese Leiterbahnen der zweiten Platte bilden die Spaltenleitungen der Matrix, in deren Kreuzungspunkten die Heizelemente angeordnet sind. Ein Heizelement kann also dadurch aktiviert werden, daß ein (mechanischer oder elektronischer) Schalter an einer der Zeilenleitungen und ein weiterer Schalter an einer der Spaltenleitungen geschlossen wird. Das an der Kreuzungsstelle der Zeilenleitung mit der Spaltenleitung liegende Heizelement wird dann als einziges von einem Strom durchflossen und bewirkt die Erzeugung eines Markierungspunktes auf dem Datenträger, während die übrigen Heizelemente inaktiv bleiben.

Wichtig ist, daß sämtliche Heizelemente in Berührungskontakt mit dem Datenträger stehen. Um dies sicherzustellen, ist gemäß einer vorteilhaften Weiterbildung

- 6 -

der Erfindung die zweite Platte an der Halterung quer zu dem Datenträger federnd befestigt, so daß die gesamte Heizvorrichtung mit allen Heizelementen fest gegen die Markierungsseite des Datenträger gedrückt wird. Alternativ oder zusätzlich kann unterhalb des Datenträgers ein Polster angeordnet sein, das für den nötigen Andruck des Datenträgers an die Heizelemente dient oder diesen Andruck noch verstärkt. Dadurch werden eventuelle Unebenheiten des Datenträgers bzw. der ersten Platte der Heizvorrichtung oder Fehlausrichtungen der Heizelemente ausgeglichen.

Die Halterung weist vorzugsweise ein flaches Gehäuse mit zwei in engem Abstand angeordneten, einen Spalt zum Einschieben des Datenträgers bildenden Wänden auf und die eine Wand ist mit einer Aussparung versehen, durch die hindurch die erste Platte der Heizvorrichtung mit den Heizelementen an dem Datenträger anliegt. Das flache Gehäuse bildet hierbei einen Einschubspalt zum Führen des Datenträgers während des Einschiebens und des Herausziehens.

Die Halterung kann um die Aussparung herum angeordnete Stützfüße aufweisen, auf denen die zweite Platte der Heizvorrichtung abgestützt ist.

Um zu erreichen, daß die Aufzeichnung nur dann erfolgt, wenn der Datenträger in vollständig eingeschobenem Zustand ist, so daß die Markierungspunkte in der richtigen Zuordnung zu dem auf den Daten-

- 7 -

träger aufgedruckten Koordinatensystem erzeugt werden, ist in vorteilhafter Weiterbildung der Erfindung vorgesehen, daß diejenige Wand der Halterung die die Aussparung aufweist, am Ende der Einschubbahn für den Datenträger mit einer Öffnung versehen ist, daß unterhalb der Öffnung auf der Innenseite der anderen Wand ein lichtelektrischer Wandler angeordnet ist und daß die zweite Platte der Heizvorrichtung eine Lichtquelle im Bereich der Öffnung aufweist. Wenn kein Datenträger eingeschoben ist, trifft das Licht der Lichtquelle auf den lichtelektrischen Wandler. In diesem Fall ist keine Auswertung bzw. Messung möglich. Erst wenn der Lichtweg von der Lichtquelle zu dem Wandler durch die Vorderkante eines Datenträgers unterbrochen wird und der Wandler kein elektrisches Signal erzeugt, erfolgt die Messung und Aufzeichnung.

Im folgenden wird unter Bezugnahme auf die Zeichnungen ein Ausführungsbeispiel der Erfindung näher erläutert.

Es zeigen:

Figur 1    eine Seitenansicht der Druckvorrichtung,

Figur 2    einen Längsschnitt durch die Druckvorrichtung,

Figur 3    einen Schnitt entlang der Linie III-III aus Figur 2,

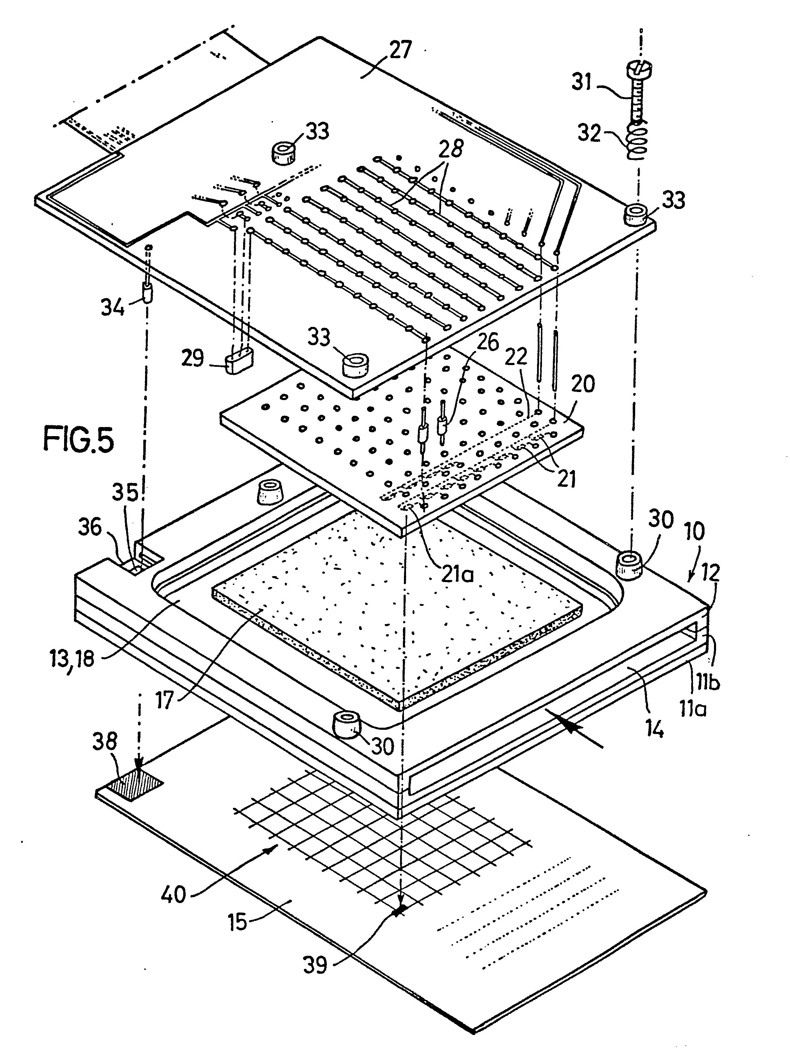

Figur 4    eine Ansicht der ersten Platte mit den
           auf ihr befestigten Heizelementen von unten
           aus Richtung der Pfeile IV-IV der Fig. 3,

Figur 5    eine Explosionsdarstellung der Druckvorrichtung,

Figur 6    ein Ausführungsbeispiel einer Hörtestkarte,
           die von der Druckvorrichtung, die als Aufzeichnungsvorrichtung eines Hörtestgerätes
           eingesetzt ist, beschriftet wird und

Figur 7    ein schematisches Schaltbild eines mit der
           Druckvorrichtung ausgerüsteten Meßgerätes.

Die dargestellte Druckvorrichtung weist ein Gehäuse 10
aus einer Bodenwand 11 und einer hierzu parallelen
Oberwand 12 auf. Die beiden Wände 11 und 12 sind in
Draufsicht im wesentlichen rechteckig und die Bodenwand 11 besteht aus zwei übereinanderliegenden Teilen
11a und 11b, von denen das untere Teil 11a eine durchgehende Platte und das unmittelbar auf dem unteren
Teil 11a aufliegende obere Teil 11b eine Platte mit einer
Aussparung 13 ist. Die Wände 11 und 12, die an ihren
Kanten unmittelbar aneinander anliegen, bilden einen
Spalt 14 zum Einschieben des Datenträgers 15 in das Gehäuse 10. Der Spalt 14 entspricht in seiner Breite im
wesentlichen der Breite des Datenträgers 15 und er ist
nur unwesentlich höher als die Stärke des Datenträgers
15, so daß der Datenträger 15 in dem Spalt 14 in Einschubrichtung geführt wird, d.h. ausschließlich vor- und
zurückbewegt werden kann. An dem Ende des Spaltes 14
befindet sich ein Anschlag 16, gegen den die Vorderkante
des Datenträgers 15 stößt, wenn der Datenträger im voll
eingeschobenen Zustand ist.

In der Aussparung 13 ist ein Kissen 17, aus Filz, Schaumstoff oder einem anderen weichen Material angeordnet. Über dieses Kissen 17 wird der Datenträger 15 beim Einschieben in den Spalt 14 geschoben, wobei das Kissen 17 eine weiche Unterlage bildet, die den Datenträger 15 bei einem von oben aufgebrachten Druck weich abstützt. Die obere Platte 12 des Gehäuses 10 weist eine in vertikaler Richtung durchgehende, an den Seiten allseitig umschlossene Aussparung 18 auf, die deckungsgleich mit der Aussparung 13 ist. In die Aussparung 18 ragt von oben her die Heizvorrichtung 19 hinein. Diese Heizvorrichtung 19 weist eine erste Platte 20 auf, die parallel zu dem Datenträger 15 bzw. zu dem Kissen 17 in der Aussparung 18 liegt. An der Unterseite der Platte 20 befinden sich Heizelemente 21 in Form von Heizwiderständen. Diese Heizwiderstände sind kleine rechteckige Platten mit flacher Unterseite. Die Heizelemente 21 sind parallel zueinander in Form einer Matrix mit Zeilen und Spalten angeordnet. Jede Zeile enthält beispielsweise acht Heizelemente 21, die entlang einer Linie angeordnet sind,und jede dazu senkrechte Spalte enthält zehn Heizelemente. Die Heizelemente einer Zeile sind mit ihrem einen Ende jeweils an eine gemeinsame Zeilenleitung 22 angeschlossen, die als Leiterbahn an der Unterseite der ersten Platte 20 verläuft. Die anderen Enden der Heizelemente 21 sind an Leiterabschnitte 23 angelötet, die zu Bohrungen 24 der Platte 20 führen. Durch die Bohrungen 21 ragen die einen Anschlußdrähte 25 von senkrecht ausgerichteten Dioden 26 hinein, welche oberhalb der ersten Platte 20 angeordnet

- 10 -

sind. Die Anzahl der Dioden 26 entspricht der Anzahl der Heizelemente 21. Die Dioden 26 sind mit ihren anderen Beinen an der zweiten Platte 27 befestigt. Die anderen Beine ragen durch Bohrungen der Platte 27 hindurch und sind auf der Oberseite der Platte 27 mit Spaltenleitungen in Form von Leiterbahnen 28 verlötet. Die vertikal ausgerichteten Dioden 26 wirken also als starre Stäbe, die (in Draufsicht) in Form eines Punktrasters angeordnet sind und als Halteelemente zur Befestigung der ersten Platte 20 an der darüber angeordneten und zur ersten Platte 20 parallelen zweiten Platte 27 dienen. Die Spaltenleitungen 28 verlaufen (in Draufsicht gesehen) rechtwinklig zu den Zeilenleitungen 22.

Die Zeilenleitungen 22 an der Unterseite der ersten Platte 20 sind durch (nicht dargestellte) Drähte, die parallel zu den Dioden 26 verlaufen, mit Leiterbahnen der zweiten Platte 27 verbunden, so daß die Zeilenleitungen 22 von einer auf der zweiten Platte 27 angeordneten elektronischen Schaltung einzeln direkt angesteuert werden können. Die Ansteuerung der Spaltenleitungen 27 erfolgt durch Transistoren 29, die an der Unterseite der Platte 27 angeordnet und mit den Spaltenleitungen 28 verbunden sind. Die übrigen elektronischen Einrichtungen, die an der zweiten Platte 27 befestigt sind und zur Ansteuerung der Spalten- und Zeilenleitungen dienen,

- 11 -

sind nicht dargestellt.

Von der oberen Wand 12 des Gehäuses 10 stehen drei
Sockel 30 nach oben ab. Diese Sockel 30 haben Gewindebohrungen, in die Schrauben 31 von oben her eingeschraubt sind. Die Schäfte der Schrauben 31 gehen durch
Schraubfedern 32 und durch Hülsen 33, die fest mit der
zweiten Platte 19 verbunden sind, hindurch. Die Schraubenfedern 32 drücken die Hülsen 32 und somit die gesamte
Heizvorrichtung 19 in Richtung auf das Gehäuse 10, so
daß die erste Platte 20 gegen den Datenträger 15 bzw.
bei nicht eingeschobenem Datenträger 15 gegen das
Kissen 17 gedrückt wird. Beim Einschieben des Datenträgers
15 in den Spalt 14 wird daher die Heizvorrichtung um
die Stärke des Datenträgers 15 angehoben, wodurch die
Schraubenfedern 32 geringfügig zusammengedrückt werden.
Wenn der Datenträger eingeschoben ist, erzeugt dasjenige Heizelement 21, das über seine Zeilenleitung 22
und Spaltenleitung 28 mit Strom versorgt wird, durch
punktuelle Erhitzung der wärmeempfindlichen Oberseite
des Datenträgers 15 eine Verfärbung an der betreffenden
Stelle.

Um sicherzustellen, daß die Druckvorrichtung nur dann
in Betrieb genommen wird, wenn ein Datenträger 15
in vollständig eingeschobenem Zustand ist, ist eine
Lichtschranke vorgesehen, die aus einer von der Unterseite der zweiten Platte 27 nach unten abstehenden
lichtemittierenden Diode 34 und einem unterhalb des

- 12 -

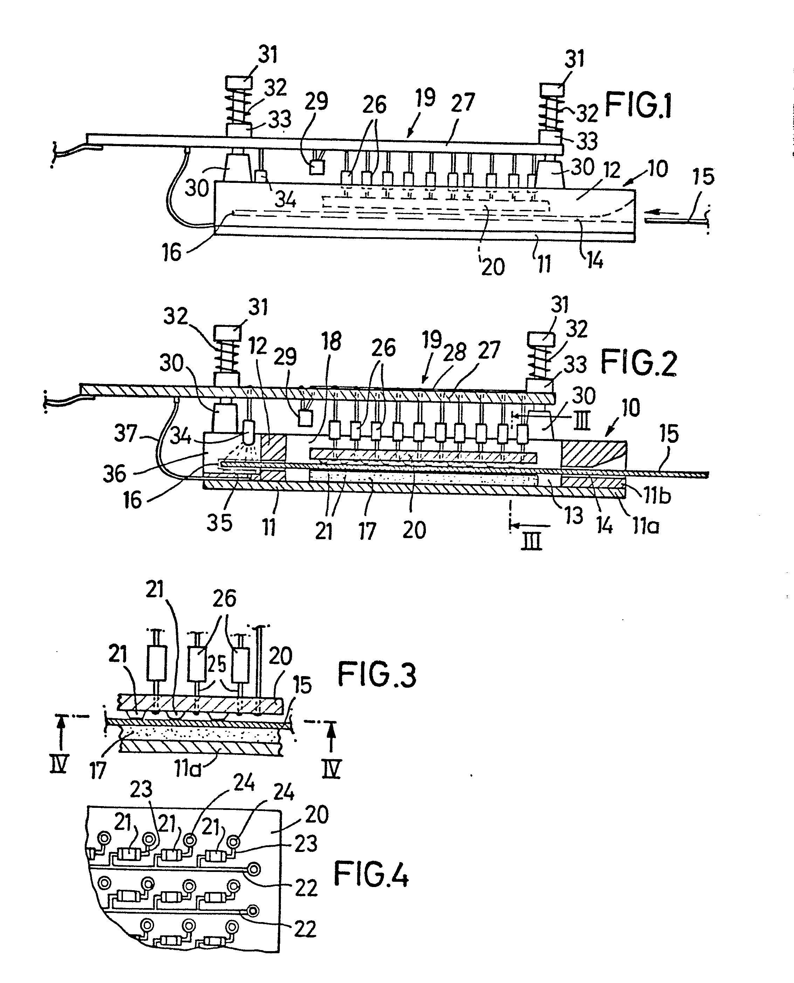

Datenträgers 15 angeordneten lichtelektrischen Wandler 35, z.B. einer Fotodiode, besteht (Figuren 2 und 5). Die Lichtschranke 34,35 ist an dem Gehäuse 10 hinter den Aussparungen 13 und 18 angeordnet, also in einem Bereich des Spaltes 14, in den nur die Vorderkante des Datenträgers 15 eindringt. Die obere Wand 12 weist eine Aussparung 36 auf, in die die lichtemittierende Diode 34 von oben her hineinragt. Auf dem Boden der Aussparung 36 befindet sich der lichtelektrische Wandler 35, der über eine flexible Leitung 37 mit einer auf der zweiten Platte 27 angeordneten Auswerteschaltung verbunden ist. An der Stelle, die die Lichtschranke 34 35 unterbricht, kann der Datenträger 15 eine farbige Markierung aufweisen, die denjenigen Frequenzanteile, auf den der Wandler 35 anspricht, absorbiert. Auf diese Weise wird gleichzeitig erkannt, ob der richtige Datenträger eingeschoben worden ist. Dieses Feld ist auf dem in Figur 5 dargestellten Datenträger 15 mit 38 bezeichnet. In Figur 5 sind die Komponenten der thermischen Druckvorrichtung in auseinandergezogenem Zustand dargestellt. Der Datenträger 15 ist unterhalb des Gehäuses 10 dargestellt, also unterhalb des Spaltes 14, in den er normalerweise eingeschoben wird, um zu verdeutlichen welche Position das farbige Feld 38 in Bezug zu der Lichtschranke 34,35 einnimmt. Wenn das Heizelement 21a mit Strom versorgt und somit erhitzt wird, wird eine farbige Markierung an der Stelle 39 des Datenträgers 15 erzeugt.

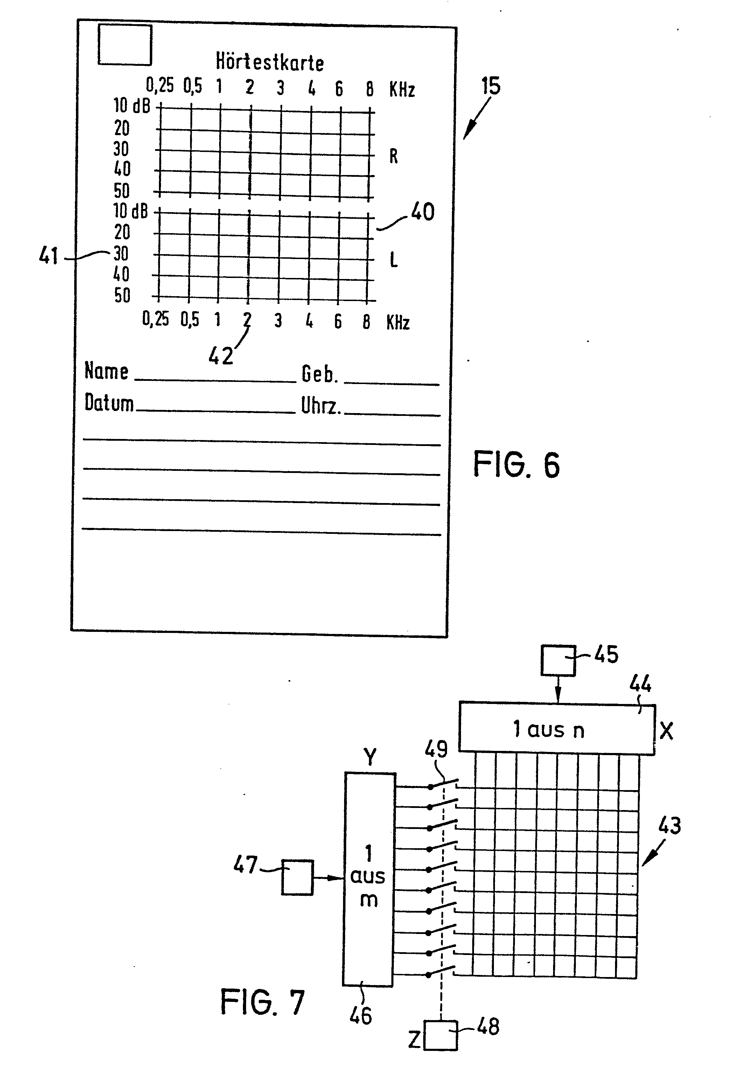

Auf dem Datenträger 15 (Fig. 5 und 6) ist ein Strichraster 40 angeordnet, dessen Kreuzungsstellen den einzelnen Heizelementen 21 entsprechen. Bei einem Hörtestgerät können entlang der Ordinate 41 beispielsweise unterschiedliche Lautstärken und entlang der Abszisse 42 unterschiedliche Frequenzen aufgetragen werden. Das gesamte Feld ist in zwei Bereiche R,L für das rechte und das linke Ohr aufgeteilt. Die entlang der Ordinate 41 aufgetragenen Werte für die Lautstärke (in dB) wiederholen sich in jedem Bereich R und L. Eine Markierung 39 an der betreffenden Kreuzungsstelle besagt, daß der Proband einen Ton mit der angegebenen Lautstärke und Frequenz gehört und dies durch Betätigung eines Schalters bestätigt hat. Die Kreuzungspunkte der Matrix mit dem zugehörigen Frequenz- und Lautstärkewert werden nacheinander aufgerufen. Wenn der Proband den Ton hört, drückt er eine Taste, durch die ein Schalter geschlossen wird. Dann wird an dem betreffenden Matrix-Kreuzungspunkt durch Aufheizen des Heizelementes 21 ein Markierungspunkt erzeugt.

Das Funktionsprinzip der Druckvorrichtung zum Drucken von Meßwerten ist in Fig. 7 dargestellt. Die Matrix 43 besteht aus n Spaltenleitungen und m Zeilenleitungen. An jedem Kreuzungspunkt einer Zeilenleitung mit einer Spaltenleitung befindet sich ein (nicht dargestelltes) Heizelement, das dann aufgeheizt wird, wenn die betreffende Zeilenleitung und Spaltenleitung beide aktiviert sind.

Die Spaltenleitungen sind an einen "1 aus n"-Kodierer 44 angeschlossen, der das Ausgangssignal eines Meßgerätes 45 empfängt. Der Kodierer 44 erzeugt in Abhängigkeit von dem Meßergebnis an einer einzigen Spaltenleitung ein "1"-Signal, während alle anderen Spaltenleitungen "0"-Signale führen.

In gleicher Weise werden die m Zeilenleitungen von einem "1 aus m"-Kodierer 46 angesteuert, der das Ausgangssignal eines Meßgerätes 47 empfängt und in Abhängigkeit von diesem Ausgangssignal an eine einzige Spaltenleitung ein "1"-Signal legt, während alle übrigen Spaltenleitungen "0"-Signale führen. Wenn das Meßgerät 45 ein Strommeßgerät und das Meßgerät 47 ein Spannungsmesser ist, kann beispielsweise eine Strom/Spannungs-Kennlinie aufgezeichnet werden. Der Kodierer 44 gibt den x-Wert an und der Kodierer 46 den y-Wert.

Zusätzlich kann noch ein dritter Parameter (z-Wert) berücksichtigt werden, der von einem Meß- oder Steuergerät 48 erzeugt wird. Dieses Meß- oder Steuergerät 48 betätigt einen Steuerschalter 49, der sämtliche Spaltenleitungen unterbricht bzw. durchschaltet. Wenn das Meß- oder Steuergerät 48 zu bestimmten Zeitpunkten, z.B. Taktzeitpunkten, aktiviert wird, die nach einer Zeitfunktion erzeugt werden, wird bei der Erzeugung der Schreibpunkte auf dem Datenträger die Zeit als z-Funktion mitberücksichtigt.

ANSPRÜCHE

1. Druckvorrichtung zur Aufzeichnung von Test- oder
   Meßergebnissen auf einen wärmeempfindlichen Datenträger, mit einer Halterung zur Aufnahme des
   Datenträgers und einer Heizvorrichtung zum selektiven Aufheizen von durch elektrische Signale
   angegebenen Stellen des Datenträgers, d a d u r c h
   g e k e n n z e i c h n e t , daß die Heizvorrichtung (19) eine Platte (20) mit zahlreichen
   in einer Ebene angeordneten Heizelementen (21)
   aufweist, die gemeinsam an dem Datenträger (15)
   anliegen.

2. Druckvorrichtung nach Anspruch 1, dadurch gekennzeichnet, daß die Heizelemente (21) an der Platte (20) matrixförmig in Zeilen und Spalten angeordnet sind, daß die einen Enden der Heizelemente
   (21) einer jeden Zeile mit einer auf der Platte
   (20) angeordneten Leiterbahn (22) verbunden sind.

3. Druckvorrichtung nach Anspruch 2, dadurch gekennzeichnet, daß die Zeilen der Matrix (43) von
   einem "1 aus n"-Kodierer (44) angesteuert sind,
   der in Abhängigkeit von einem Meßwert oder einem
   Steuersignal eine der Zeilenleitungen aktiviert
   und daß die Spalten der Matrix (43) von einem
   "1 aus m"-Kodierer (46) angesteuert sind, der in
   Abhängigkeit von einem Meßwert oder einem Steuersignal eine der Spaltenleitungen aktiviert, wobei
   n und m jeweils beliebige ganze Zahlen sind.

4. Druckvorrichtung nach Anspruch 3, dadurch gekennzeichnet, daß sämtliche Zeilenleitungen bzw.
sämtliche Spaltenleitungen von einem Steuerschalter (49) synchron von dem zugehörigen Kodierer (46) abschaltbar sind.

5. Druckvorrichtung nach Anspruch 2, dadurch gekennzeichnet, daß die anderen Enden der Heizelemente
(21) an Leiterabschnitte (23) angelötet sind,
welche zu Bohrungen (24) der Platte (20) führen,
und daß in die Bohrungen (24) die einen Enden von
Dioden (26) eingelötet sind.

6. Druckvorrichtung nach Anspruch 5, dadurch gekennzeichnet, daß die Dioden (26) senkrecht zu der
Platte (20) angeordnet und mit ihren anderen
Enden an einer zur ersten Platte (20) parallelen
zweiten Platte (27) befestigt sind.

7. Druckvorrichtung nach Anspruch 6, dadurch gekennzeichnet, daß die zweite Platte (27) spaltenweise
durchgehende Leiterbahnen (28) aufweist, die
rechtwinklig zu den Leiterbahnen (22) der ersten
Platte (20) verlaufen.

8. Druckvorrichtung nach einem der vorhergehenden
Ansprüche, dadurch gekennzeichnet, daß die zweite
Platte (27) an der Halterung (10) quer zum Datenträger (15) federnd befestigt ist.

9. Druckvorrichtung nach einem der Ansprüche 1 bis 7,
dadurch gekennzeichnet, daß die Halterung ein
flaches Gehäuse (10) mit zwei in engem Abstand angeordneten, einen Spalt (14) zum Einschieben des
Datenträgers (15) bildenden Wänden (11,12) aufweist und daß die eine Wand (12) mit einer Aussparung (18) versehen ist, durch die hindurch
die erste Platte (20) der Heizvorrichtung (19)
mit den Heizelementen (21) an dem Datenträger (15)
anliegt.

10. Druckvorrichtung nach Anspruch 9, dadurch gekennzeichnet, daß die Halterung (10) um die Aussparung (18) herum angeordnete Stützfüße (30) aufweist, auf denen die zweite Platte (27) der Heizvorrichtung (19) federnd abgestützt ist.

11. Druckvorrichtung nach einem der vorhergehenden
Ansprüche, dadurch gekennzeichnet, daß diejenige
Wand (12), die die Aussparung (18) aufweist, am
Ende der Einschubbahn für den Datenträger (15)
mit einer Ausnehmung (36) versehen ist, daß
unterhalb der Ausnehmung (36) auf der Innenseite
der anderen Wand (11) ein lichtelektrischer Wandler (35) angeordnet ist, und daß die zweite Platte
(27) der Heizvorrichtung (19) eine Lichtquelle
(34) im Bereich der Ausnehmung (36) aufweist.

FIG.1

FIG.2

FIG.3

FIG.4

FIG.5

Hörtestkarte

0,25 0,5 1 2 3 4 6 8 KHz

10 dB
20
30
40
50

R

10 dB
20
30
40
50

L

40

41

0,25 0,5 1 2 3 4 6 8 KHz

42

Name _____ Geb. _____

Datum_____ Uhrz._____

_____

_____

_____

_____

15

FIG. 6

45

44

1 aus n

X

Y

49

47

1
aus
m

43

FIG. 7

46

Z

48